Europäisches Patentamt

European Patent Office

Office européen des brevets

(11) Publication number: **0 523 163 B1**

(12) **EUROPEAN PATENT SPECIFICATION**

(45) Date of publication of patent specification: **07.09.94**

(51) Int. Cl.⁵: **C08L 35/06**, C08L 55/02, C08K 7/02

(21) Application number: **91907903.8**

(22) Date of filing: **05.04.91**

(86) International application number:
**PCT/NL91/00057**

(87) International publication number:
**WO 91/15543 (17.10.91 91/24)**

(54) **FIBRE-REINFORCED POLYMER COMPOSITION.**

(30) Priority: **06.04.90 NL 9000806**

(43) Date of publication of application:
**20.01.93 Bulletin 93/03**

(45) Publication of the grant of the patent:
**07.09.94 Bulletin 94/36**

(84) Designated Contracting States:
**AT BE CH DE DK ES FR GB GR IT LI LU NL SE**

(56) References cited:
**EP-A- 0 200 184**
**EP-A- 0 202 707**

(73) Proprietor: **DSM N.V.**
**Het Overloon 1**
**NL-6411 TE Heerlen (NL)**

(72) Inventor: **KLUMPERMAN, Lubertus**
**Bornerkapelstraat 21**
**NL-6121 HL Born (NL)**
Inventor: **VAN DER VEEN, Dolf**
**Felix Ruttenlaan 64**
**NL-6132 CX Sittard (NL)**
Inventor: **BOYENS, Joseph, Paulus, Hubertus**
**Sleyerweg 14**
**NL-6174 RW Schinnen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 523 163 B1**

### Description

The invention relates to a polymer composition at least containing a reinforcing fibre and a copolymer, in which polymer composition the copolymer consists of 50-90% (wt) styrene, 10-50% (wt) maleic anhydride and 0-30% (wt) of a third monomer.

Such a composition is known from US-A-3642949. In that patent specification a composition is described consisting of a styrene-maleic anhydride (SMA) copolymer and a graft copolymer of a styrene-acrylonitrile copolymer grafted on a butadiene rubber (ABS). This composition shows a good impact resistance in combination with a high dimensional stability under heat. In order to increase the rigidity of the composition an amount of reinforcing fibres can be added to the composition. Owing to these properties, combined with an excellent resistance against solvents, the composition is suited not only for use in domestic and electrical apparatuses, but also for applications in the automotive industry.

A disadvantage of the composition as described in the above-mentioned patent specification is that the incorporation of reinforcing fibres results in a strong decrease of the impact resistance and of the flow properties.

The object of the invention therefore is to provide a polymer composition incorporating reinforcing fibres with an optimum combination of impact resistance and flow properties, in addition to a good rigidity.

The polymer compostion according to the invention is characterized in that the polymer composition comprises:

- 10-89% (wt) of a styrene-maleic anhydride copolymer with a maleic anhydride content of 22-40 wt.%, preferably 24-32 wt.%, and a molecular weight of 50,000 - 200,000 g/mole;
- 10-89% (wt) of a graft copolymer of 20-80% (wt) of a butadiene rubber with 80-20% (wt) of a copolymer consisting of 60-80% (wt) styrene and/or $\alpha$-methylstyrene and 20-40% (wt) acrylonitrile grafted thereon;
- 0-50% (wt) of a copolymer consisting of 60-80% (wt) styrene and/or $\alpha$-methylstyrene and 20-40% (wt) acrylonitrile;
- 1-50% (wt) of a reinforcing fibre;

and in which the ratio between the weight percentage of reinforcing fibre, calculated on the whole polymer composition, and the maleic anhydride content, calculated on the styrene-maleic anhydride copolymer is 0.62 to 1.40.

It has been found that with the polymer composition according to the invention an optimum combination of properties is obtained, the polymer composition being highly suited for being processed by means of injection moulding. Finished articles obtained from the polymer composition according to the invention, moreover, have a fine appearance.

Moreover it has been found that there is no chemical bond between the anhydride and the reinforcing fibre after extraction of the fibres from the polymer matrix.

The extraction can be effected by introducing the polymer composition during stirring into a suitable solvent, preferably N,N-dimethylformamide (DMF), in which the matrix polymer dissolves. After the stirring has been discontinued, the reinforcing fibre settles. After decantation of the liquid, the reinforcing fibre is dried and inspected, by means of infrared spectrometry, for the presence of SMA and/or anhydride groups. The extraction principle compares with techniques known in the art for determining the degree of grafting of ABS, for instance described in Eur. Pol. J., 10 (1974) 545-555.

It has been found that the polymer compositions containing reinforcing fibres on which, after extraction, no anhydride groups are present, as could be demonstrated by infrared spectrometry, showed the optimum combination of impact resistance, flow and rigidity.

The rubber that can be used in the graft copolymer in the polymer composition according to the invention is preferably chosen from a group consisting of polybutadiene, butadiene-styrene rubber and butadiene-acrylonitrile rubber.

There are various suitable processes for preparing the copolymer of styrene and maleic anhydride. An important aspect to be remembered in the preparation of these copolymers is the strong tendency of these two monomers to polymerize alternatingly. As the two r-values are zero or nearly zero, an alternating polymer will be obtained if no special measures are taken, optionally combined with styrene homopolymer. In order to obtain a copolymer with less than an equimolar amount of maleic anhydride in the copolymer, which maleic anhydride is statistically distributed in the copolymer, special measures must be taken.

A possible process for preparing the SMA copolymer is characterized in that the monomers and/or solutions thereof are reacted with each other in at least two reaction zones, which are in open contact with each other at the top and at the bottom, in which process the reaction mixture is circulated through the reaction zones by means of a mixing device or transport device, for instance described in EP-A-202706.

Alternative preparation processes are described, inter alia, in Hanson and Zimmerman, Ind. Eng. Chem. Vol. 49, no. 11 (1957) pp. 1803-1807.

The polymerisation of styrene and maleic anhydride is preferably effected in mass or in solution. Suspension and emulsion polymerization are generally less suited, because, owing to the presence of water in the styrene, maleic anhydride may hydrolyze to form maleic acid. The solvents used for the polymerisation may be butylacetate, ethylacetate, methylisobutylketone, dioxane, cyclopentanone, 4-butyrolactone, acetone, pyrridine or DMF. Preference is given to the use of methylethylketone (MEK). The polymerisation can be carried out in the presence of 1-80% (wt), more specifically 10-50% (wt), solvent.

The copolymer of styrene and maleic anhydride may contain up to 30% (wt) other monomers, for instance acrylonitrile, the unsaturated anhydrides other than maleic anhydride, the corresponding imides, for instance N-phenylmaleimide, acrylates and/or methacrylates, substituted styrene derivatives, for instance $\alpha$-methylstyrene, bromostyrene. However, this is not necessary. The other components of the polymer composition are the styrene-acrylonitrile copolymer (SAN), the $\alpha$-methylstyrene-acrylonitrile copolymer ($\alpha$-methyl-SAN) and the acrylonitrile-styrene graft copolymer on a rubber (ABS). These can be prepared in the usual manner by polymerisation in emulsion, suspension, solution or mass or combinations of these. These polymerization processes are generally known. For further information reference may be made to, for instance, the US patent specification 3,238,275.

In the polymer composition according to the invention any reinforcing fibre can be used. Examples of such fibres are carbon fibres, aramide fibres, wollastonite fibres and glass fibres. The invention is particularly suited for the use of glass fibres as reinforcing material.

The glass fibre used may be any commercially available glass fibre. Preference is given to the use of glass fibres with a length of between 2-15 mm. More particularly 4.5-10 mm. The glass fibres may be provided with an extra coating for improving the adhesion with the polymer composition to be mixed, but this is not strictly necessary.

The amount of glass fibre that must be added in the polymer composition depends on the prevailing maleic anhydride content calculated on the SMA copolymer. In order to obtain the optimum combination of properties the ratio between the glass fibre, calculated on the whole polymer composition, and the maleic acid content, calculated on the SMA copolymer, is at least 0.62 : 1.40. The ratio is preferably 0.62 : 0.90. More particularly 0.71 : 0.77.

It is possible to add to the polymer composition according to the invention the usual additives, such as stabilizers, anti-oxidants, lubricants, mould release agents, plasticizers, pigments and colourants.

The polymer composition can be prepared by mixing the various components in the melt using a mixing device; for instance, the well-known batch or continuous kneaders, such as a Banbury mixer, or a single or twin-screw extruder.

The production of the polymer composition according to the invention is characterized in that the components are mixed in the mixing device at a temperature which is at least 70°C above the glass transition temperature of the styrene-maleic anhydride copolymer. Particularly 75°C above the glass transition temperature.

The polymer composition according to the invention is highly suited for the production of numerous articles, such as tubes, furniture, dashboards for motor cars, cupboards and casings for electronic and domestic apparatuses, shoe heels, caravans, skis and surfboards.

Examples I up to and including XIV and comparative examples A and B

To a twin-screw extruder the following materials were supplied:
1. One of the following styrene-maleic anhydride copolymers:
   - SMA-1 copolymer; a copolymer in which the MA content is 28% (wt) and in which the molecular weight of the SMA is 110,000 g/mole. Glass transition temperature, Tg = 162°C.
   - SMA-2; 26% (wt) MA, Mw = 80,000 g/mole, Tg 157°C.
   - SMA-3; 33% (wt) MA, Mw = 1700, Tg = 170°C.
   - SMA-4; 14% (wt) MA, Mw = 190,000, Tg = 133°C.
2. A graft copolymer of butadiene rubber with a SAN copolymer grafted thereon (ABS), in which 40% (wt) rubber is present and 31% (wt) ACN calculated on the SAN phase.
3. One of the following styrene-acrylonitrile copolymers
   - SAN-1 Luran 2770, a SAN copolymer of the firm of BASF, ACN content 27% (wt),
   - SAN-2 JSRR-SAN, of the firm of JSR, ACN content 29% (wt).
4. Glass fibre, Owens Corning 414x7, chopped glass fibres with a length of 4.5 mm.
The above-mentioned materials 1-4 were mixed in amounts as stated in table 1 and extruded in a ZSK twin-screw extruder (28 D).

Temperature setting: 210 - 240 - 240 - 240 - 240, with an amount of 25 parts by weight glass fibre added to every 100 parts by weight of components 1 up to and including 3.

TABLE 1

| Ex. | ABS pwb | SMA-1 | SMA-2 pwb | SMA-3 | SMA-4 | SAN-1 pwb | SAN-2 |
|-----|---------|-------|-----------|-------|-------|-----------|-------|
| I | 50 | 50 | - | - | - | - | - |
| II | 40 | 60 | - | - | - | - | - |
| III | 50 | - | 50 | - | - | - | - |
| IV | 35 | - | 45 | - | - | - | - |
| V | 50 | 40 | - | - | - | 10 | - |
| VI | 40 | 40 | - | - | - | 20 | - |
| VII | 30 | 40 | - | - | - | 30 | - |
| VIII | 50 | - | 40 | - | - | 10 | - |
| IX | 30 | - | 40 | - | - | 30 | - |
| X | 50 | - | 40 | - | - | - | 10 |
| XI | 30 | - | 40 | - | - | - | 30 |
| XII | 50 | 40 | - | - | - | - | 10 |
| XIII | 40 | 40 | - | - | - | - | 20 |
| XIV | 30 | 40 | - | - | - | - | 30 |
| A | 50 | - | - | 40 | - | 10 | - |
| B | 50 | - | - | - | 40 | 10 | - |

Of the granulate obtained from the extruder small bars were made on an Arburg injection moulding machine.

The bars produced were subsequently tested for:

- Vicat according to ISO 306/B in °C;
- Izod according to ISO 180 in kJ/m$^2$;
- VEM (instrumented falling dart test), $E_{break}$ and $F_{max}$;
- Charpy, unnotched (kJ/m$^2$) according to ISO 179 2D;
- Tensile test, strength (N/mm$^2$) according to ISO 527 type 2;
- Flexural modulus parallel (//) and perpendicular ($\perp$), N/mm$^2$, according to ISO 178.

Table 2 shows the values found.

TABLE 2

| Ex. | Vicat | Izod | | VEM | | Charpy | Tensile | Flexural | |
|-----|-------|------|------|-----|------|--------|---------|----------|------|
| | °C | // | ⊥ | Ebr | Fmax | unn. | test strength | modulus // | |
| I | 135 | 10.2 | 8.5 | 6 | 2090 | 17.5 | 88 | 4720 | 3540 |
| II | 141 | 8.8 | 6.4 | 4.6 | 1793 | 16.3 | 94 | 5120 | 3960 |
| III | 130 | 9.4 | 7.3 | 4.8 | 1699 | 16.7 | 84.5 | 4690 | 3540 |
| IV | 127.9 | 10.5 | 8.7 | 6 | 1926 | 18 | 84 | 4800 | 3490 |
| V | 129 | 9.8 | 8.8 | 6.3 | 2218 | 18.6 | 89.2 | 4750 | 3530 |
| VI | 128 | 8.8 | 7.4 | 5.4 | 2197 | 18.6 | 94.7 | 4910 | 3930 |
| VII | 128 | 7.3 | 6.0 | 4.6 | 1850 | 16 | 101.3 | 5550 | 4230 |
| VIII | 125 | 10.1 | 8.7 | 6.4 | 2050 | 17.8 | 85.7 | 4710 | 3490 |
| IX | 125 | 7.4 | 5.7 | 4.9 | 1912 | 15.4 | 99.4 | 5740 | 4260 |
| X | 124 | 10 | 8.2 | 5.8 | 2054 | 18 | 86.3 | 4820 | 3540 |
| XI | 124 | 6.7 | 5.8 | 4.3 | 1603 | 14.2 | 94.4 | 5450 | 4090 |
| XII | 128 | 10.2 | 8.7 | 6.3 | 2148 | 18.3 | 87.5 | 4690 | 3600 |
| XIII | 127 | 9 | 7.2 | 5.7 | 2214 | 17.5 | 94.1 | 5100 | 3760 |
| XIV | 125 | 7.1 | 5.1 | 4.2 | 1834 | 16 | 94.3 | 5570 | 4227 |
| A | 119 | 2.9 | 2.1 | – | – | – | – | – | – |
| B | 123 | 7.6 | 6.7 | 4.3 | 1679 | 14.7 | 76 | 4570 | 3310 |

A comparison of example B with examples V, VIII, X and XII shows that a substantial improvement has been found in which the polymer composition according to the invention shows an optimum combination of properties.

In examples I, II, V-VII and XII-XIV the glass fibre : maleic anhydride ratio is 0.71, in examples III, IV, VIII-XI: 0.77, in comparative example A and comparative example B: 0.606 and 1.43 respectively.

Extraction process

1g glass-filled polymer composition as described in examples I-XIV and in the comparative examples was introduced in 10ml DMF.

During stirring at room temperature, the matrix material dissolved and the rubber phase with copolymer grafted thereon came to be suspended in the solvent. After completion of the dissolution/suspension, the stirring was discontinued and the glass settled. The above liquid was decanted. Again, 10ml DMF was added and the process was repeated. After extracting with DMF once again (3x in all with DMF), the process was carried out with chloroform ($CHCl_3$) twice again. The glass was subsequently dried and checked for the presence of SMA and/or anhydride groups, using FT-IR (Fourier transformed infra-red).

Result:

| | SMA/anhydride present |
|---|---|
| Ex. I-XIV | no |
| ex. A | yes |
| ex. B | yes |

## Claims

1. Polymer composition at least containing a reinforcing fibre and a copolymer, in which polymer composition the copolymer consists of 50-90% (wt) styrene, 10-50% (wt) maleic anhydride and 0-30% (wt) of a third monomer, characterized in that the polymer composition contains:
   - 10-89% (wt) of the styrene-maleic anhydride copolymer with a maleic anhydride content of 22-40 wt.% and a molecular weight of 50,000 - 200,000 g/mole;
   - 10-89% (wt) of a graft copolymer of 20-80% (wt) of a butadiene rubber with 80-20% (wt) of a copolymer consisting of 60-80% (wt) styrene and/or $\alpha$-methylstyrene and 20-40% (wt) acrylonitrile grafted thereon;
   - 0-50% (wt) of a copolymer consisting of 60-80% (wt) styrene and/or $\alpha$-methylstyrene and 20-40% (wt) acrylonitrile;
   - 1-50% (wt) of a reinforcing fibre;
   and in which the ratio between the weight percentage of reinforcing fibre, calculated on the whole polymer composition, and the maleic anhydride content, calculated on the styrene-maleic anhydride copolymer, is 0.62 to 1.40.

2. Polymer composition according to claim 1, characterized in that the maleic anhydride content is 24-32% (wt) calculated on the styrene-maleic anhydride copolymer.

3. Polymer composition according to any one of claims 1-2, characterized in that the ratio between the reinforcing fibre and the maleic anhydride content is 0.62 : 0.90.

4. Polymer composition according to any one of claims 1-3, characterized in that the reinforcing fibre is a glass fibre.

5. Process for the production of a polymer composition according to any one of claims 1-4 with the components being mixed in a mixing device, which process is characterized in that the mixing of the components takes place at a temperature at least 70°C above the glass transition temperature of the styrene-maleic anhydride copolymer.

6. Article obtained from the polymer composition according to any one of claims 1-4 or produced from the polymer composition obtained by applying the process according to claim 5.

## Patentansprüche

1. Polymerzusammensetzung, welche mindestens eine Verstärkungsfaser und ein Copolymer enthält, in welcher Polymerzusammensetzung das Copolymer aus 50-90 % (Masse) Styrol, 10-50 % (Masse) Maleinsäureanhydrid und 0-30 % (Masse) eines dritten Monomers besteht, dadurch gekennzeichnet, daß die Polymerzusammensetzung enthält:
   - 10-89 % (Masse) des Styrol-Maleinsäureanhydrid-Copolymers mit einem Maleinsäureanhydridgehalt von 22-40 % Masse und einem Molekulargewicht von 50.000-200.000 g/mol;
   - 10-89 % (Masse) eines Pfropfcopolymers aus 20-80 % (Masse) eines Butadiengummis mit 80-20 % (Masse) eines Copolymers bestehend aus 60-80 % (Masse) Styrol und/oder $\alpha$-Methylstyrol und 20-40 % (Masse) darauf aufgepfropftem Acrylnitril;
   - 0-50 % (Masse) eines Copolymers bestehend aus 60-80 % (Masse) Styrol und/oder $\alpha$-Methylstyrol und 20-40 % (Masse) Acrylnitril;

- 1-50 % (Masse) einer Verstärkungsfaser;

und worin das Verhältnis zwischen den Prozent Masse der Verstärkungsfaser, berechnet auf die gesamte Polymerzusammensetzung, und dem Maleinsäureanhydridgehalt, berechnet auf das Styrol-Maleinsäureanhydrid-Copolymer, 0,62 bis 1,40 ist.

2. Polymerzusammensetzung nach Anspruch 1, dadurch gekennzeichnet, daß der Maleinsäureanhydridgehalt 24-32 % (Masse), berechnet auf das Styrol-Maleinsäureanhydrid-Copolymer, beträgt.

3. Polymerzusammensetzung nach einem der Ansprüche 1-2, dadurch gekennzeichnet, daß das Verhältnis von Verstärkungsfaser zum Maleinsäureanhydridgehalt 0,62 : 0,90 ist.

4. Polymerzusammensetzung nach einem der Ansprüche 1-3, dadurch gekennzeichnet, daß die Verstärkungsfaser eine Glasfaser ist.

5. Verfahren zur Herstellung einer Polymerzusammensetzung nach einem der Ansrpüche 1-4, wobei die Komponenten in einer Mischvorrichtung gemischt werden, welches Verfahren dadurch gekennzeichnet ist, daß das Mischen der Komponenten bei einer Temperatur von mindesten 70°C über der Glasübergangstemperatur des Styrol-Maleinsäureanhydrid-Copolymers stattfindet.

6. Gegenstand, der aus der Polymerzusammensetzung nach einem der Ansprüche 1-4 erhalten ist oder aus der durch Anwendung des Verfahrens nach Anspruch 5 erhaltenen Polymerzusammensetzung hergestellt ist.

**Revendications**

1. Composition polymère contenant au moins une fibre renforçante et un copolymère, le copolymère dans cette composition polymère étant constitué de 50-90 % (en poids) de styrène, 10-50 % (en poids) d'anhydride maléique et 0-30 % (en poids) d'un troisième monomère, cette composition polymère étant caractérisée en ce qu'elle comporte :
   - de 10 à 89 % (en poids) du copolymère styrène-anhydride maléique ayant une teneur en anhydride maléique de 22 à 40 % en poids, et un poids moléculaire de 50 000 à 200 000 g/mole ;
   - de 10 à 89 % (en poids) d'un copolymère greffé formé de 20 à 80 % (en poids) d'un caoutchouc butadiène avec de 80 à 20 % (en poids) d'un copolymère constitué de 60 à 80 % (en poids) de styrène et/ou d'$\alpha$-méthylstyrène et de 20 à 40 % (en poids) d'acrylonitrile greffé dessus ;
   - de 0 à 50 % (en poids) d'un copolymère constitué de 60 à 80 % (en poids) de styrène et/ou d'$\alpha$-méthylstyrène et de 20 à 40 % (en poids) d'acrylonitrile
   - de 1 à 50 % (en poids) d'une fibre renforçante ;

et en ce que le rapport entre le pourcentage en poids de la fibre renforçante, calcule sur la composition polymère totale, et la teneur en anhydride maléique, calculée sur le copolymère styrène-anhydride maléique est de 0,62 à 1,40.

2. Composition polymère selon la revendication 1, caractérisée en ce que la teneur en anhydride maléique est de 24-32 % ( en poids ) calculée sur le copolymère styrène-anhydride maléique.

3. Composition polymère selon l'une quelconque des revendications 1 ou 2, caractérisée en ce que le rapport entre la teneur en fibre renforçante et la teneur en anhydride maléique est de 0,62 : 0,90.

4. Composition polymère selon l'une quelconque des revendications 1 à 3, caractérisée en ce que la fibre renforçante est une fibre de verre.

5. Procédé pour la production d'une composition polymère selon l'une quelconque des revendications 1 à 4 avec mélange des composants dans un dispositif de mélange, ledit procédé étant caractérisé en ce que le mélange des composants s'effectue à une température au moins 70°C au-dessus de la température de transition vitreuse du copolymère styrène-anhydride maléique.

6. Article obtenu à partir de la composition polymère selon l'une quelconque des revendications 1 à 4 ou produit à partir de la composition polymère obtenue en applicant le procédé selon la revendication 5.